(19) Europäisches Patentamt
European Patent Office
Office européen des brevets

(11) **EP 4 770 174 A1**

(12) **EUROPEAN PATENT APPLICATION**
published in accordance with Art. 153(4) EPC

(43) Date of publication:
**01.07.2026 Bulletin 2026/27**

(21) Application number: **24858340.3**

(22) Date of filing: **16.08.2024**

(51) International Patent Classification (IPC):
***H04W 24/02*** (2009.01)

(52) Cooperative Patent Classification (CPC):
**H04W 24/02; H04W 72/044; H04W 72/542**

(86) International application number:
**PCT/CN2024/112695**

(87) International publication number:
**WO 2025/044797 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023 CN 202311110126**

(71) Applicant: **ZTE CORPORATION**
**Shenzhen, Guangdong 518057 (CN)**

(72) Inventors:
• **ZHANG, Jingchao**
**Shenzhen, Guangdong 518057 (CN)**
• **LI, Jianguo**
**Shenzhen, Guangdong 518057 (CN)**
• **WANG, Guoyan**
**Shenzhen, Guangdong 518057 (CN)**
• **ZHOU, Xianwen**
**Shenzhen, Guangdong 518057 (CN)**
• **PANG, Lei**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **BEAM WEIGHT ADJUSTMENT METHOD, AND ELECTRONIC DEVICE AND STORAGE MEDIUM**

(57) Provided are a beam weight adjustment method, and an electronic device and a storage medium. The method comprises: acquiring any cell cluster within a preset region and at least one target operating parameter corresponding to the cell cluster, wherein the target operating parameter is an operating parameter corresponding to an uplink signal; adjusting the beam weight of each communication cell in the cell cluster on the basis of the at least one target operating parameter corresponding to the cell cluster, so as to obtain a target beam weight of each communication cell when the target operating parameter reaches the optimal; and updating the real-time beam weight of each communication cell on the basis of the target beam weight of each communication cell.

FIG. 1

Processed by Luminess, 75001 PARIS (FR)

**Description**

CROSS-REFERENCE TO RELATED APPLICATIONS

This application claims priority to Chinese patent application No. 202311110126.X filed with the CNIPA on August 30, 2023, the entire contents of which are incorporated hereby by reference.

TECHNICAL FIELD

The present disclosure relates to, but is not limited to, the technical field of communications.

BACKGROUND

Generally, in the communication between a base station and a terminal, the communication quality of an uplink (i.e., a link used by the terminal to transmit data to the base station) and the communication quality of a downlink (i.e., a link used by the base station to transmit data to the terminal) are not completely symmetrical. Therefore, the terminal may not camp on the communication cell with the optimal uplink communication quality, and thus may not obtain a good uplink communication experience at the terminal.

SUMMARY

The present disclosure provides a method for adjusting beamforming weight, and an electronic device and a readable storage medium.

An embodiment of the present disclosure provides a method for adjusting beamforming weight, including: acquiring any cell cluster within a preset region and at least one target operating parameter corresponding to the cell cluster, wherein the target operating parameter is an operating parameter corresponding to an uplink signal; adjusting beamforming weights of communication cells in the cell cluster based on the at least one target operating parameter corresponding to the cell cluster, to obtain respective target beamforming weights of the communication cells when the target operating parameter is optimal; and updating real-time beamforming weights of the communication cells based on the respective target beamforming weights of the communication cells.

An embodiment of the present disclosure provides an electronic device, including: one or more processors; and a storage having one or more programs stored thereon which, when executed by the one or more processors, cause the one or more processors to implement the method for adjusting beamforming weight according to any embodiment of the present disclosure.

An embodiment of the present disclosure provides a readable storage medium having a computer program stored thereon which, when executed by a processor, causes the method for adjusting beamforming weight according to any embodiment of the present disclosure to be implemented.

BRIEF DESCRIPTION OF DRAWINGS

FIG. 1 is a schematic flowchart of a method for adjusting beamforming weight according to an embodiment of the present disclosure.

FIG. 2 is a block diagram of a beamforming weight adjustment apparatus according to an embodiment of the present disclosure.

FIG. 3 is a block diagram of a beamforming weight adjustment system according to an embodiment of the present disclosure.

FIG. 4 is a schematic flowchart showing an operating method of a beamforming weight adjustment system according to an embodiment of the present disclosure.

FIG. 5 is a block diagram of an electronic device according to an embodiment of the present disclosure.

DETAIL DESCRIPTION OF EMBODIMENTS

For clarity and better understanding of the objects, technical solution and advantages of the present disclosure, embodiments of the present disclosure will be described in detail below in conjunction with the accompanying drawings. It should be noted that the embodiments of the present disclosure and features therein may be combined with each other in any manner as long as they are not contradictory.

In a New Radio (NR) communication network of the 5th Generation Mobile Communication Technology (5G), a base station and a terminal may communicate with each other through an uplink and a downlink. However, the uplink communication quality (i.e., communication quality of the uplink) and the downlink communication quality (i.e., communication quality of the downlink) are not completely symmetrical, and the terminal may not camp on the communication cell with the optimal uplink communication quality.

In this case, if the terminal transmits communication data to the base station through the uplink, a plurality of communication cells of the base station may receive the communication data transmitted from the terminal. Particularly, a communication cell with an optimal uplink communication quality will receive a communication signal transmitted from the terminal at a maximum transmitting power, but does not have an authority to process the data from the terminal. Therefore, the communication cell with the optimal uplink communication quality may regard the communication signal transmitted from the terminal at the maximum transmitting power as interference noise, which not only makes it impossible to provide a high-quality communication service for the terminal, but also interferes with normal processing of other terminals therein by the communication cell with the optimal uplink communication quality, thereby reducing the communication efficiency.

The present disclosure provides a method for adjusting beamforming weight, and an electronic device and a storage medium, which can solve at least the above problem.

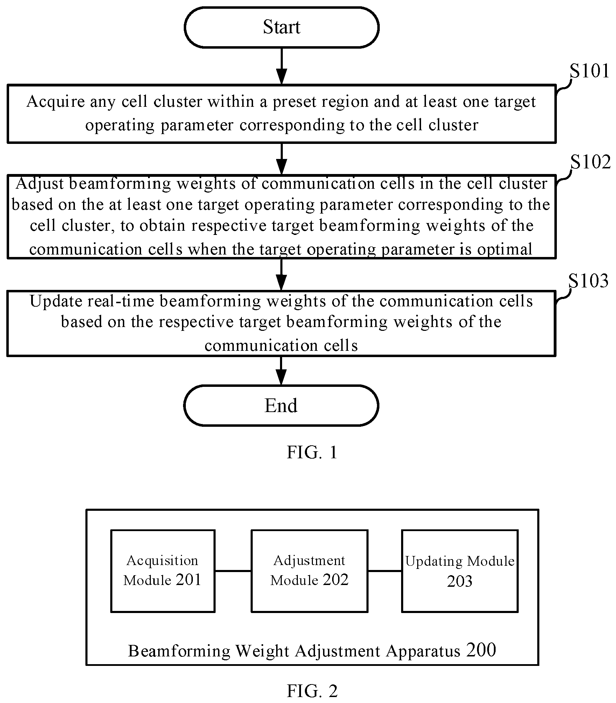

FIG. 1 is a schematic flowchart of a method for adjusting beamforming weight according to an embodiment of the present disclosure. The method for adjusting beamforming weight may be applied to a beamforming weight adjustment apparatus (e.g., a base station). As shown in FIG. 1, the method for adjusting beamforming weight provided in the embodiment of the present disclosure includes, but is not limited to, the following operations S101 to S103.

Operation S101 includes acquiring any cell cluster within a preset region and at least one target operating parameter corresponding to the cell cluster.

The target operating parameter is an operating parameter corresponding to an uplink signal.

Operation S102 includes adjusting the beamforming weight of each communication cell in the cell cluster based on the at least one target operating parameter corresponding to the cell cluster, to obtain a target beamforming weight of each communication cell when the target operating parameter is optimal.

Operation S103 includes updating a real-time beamforming weight of each communication cell based on the target beamforming weight of each communication cell.

In this embodiment, by acquiring any cell cluster within a preset region and at least one target operating parameter corresponding to the cell cluster, where the target operating parameter is an operating parameter corresponding to an uplink signal, each cell cluster can be conveniently analyzed to optimize the communication resources of a plurality of communication cells in each cell cluster; by adjusting the beamforming weight of each communication cell in the cell cluster based on the at least one target operating parameter corresponding to the cell cluster, an optimal target operating parameter of each cell cluster can be obtained, so that a target beamforming weight of each communication cell when the target operating parameter is optimal can be obtained; and then, by updating a real-time beamforming weight of each communication cell based on the target beamforming weight of each communication cell, the real-time beamforming weight of each communication cell can meet the requirement of communication link quality in the preset region, so that the terminal can camp on the communication cell with the optimal communication quality in the uplink, thereby improving the communication efficiency.

In some embodiments, adjusting the beamforming weight of each communication cell in the cell cluster based on the at least one target operating parameter corresponding to the cell cluster, to obtain the target beamforming weight of each communication cell when the target operating parameter is optimal in operation S102 includes:
constructing an objective function of the cell cluster based on at least one target operating parameter corresponding to the cell cluster; and optimizing the objective function of the cell cluster to obtain a target beamforming weight combination of the cell cluster under the condition that the adjusted target operating parameter is optimal.

The target beamforming weight combination includes target beamforming weights corresponding to a plurality of communication cells in the cell cluster.

For example, the objective function of one cell cluster corresponds to one or more target operating parameters, and iterative adjustment may be performed on at least one target operating parameter, respectively, so that the adjusted target operating parameter of the cell cluster is optimal, a target beamforming weight combination of the cell cluster under the condition that the adjusted target operating parameter is optimal can be determined, where the target beamforming weight combination can reflect an adjustment condition of at least one target operating parameter, and the target beamforming weight corresponding to each communication cell in the target beamforming weight combination can be more suitable for utilization of communication resources for each communication cell, thereby improving the communication efficiency.

In some exemplary implementations, a plurality of target operating parameters are included, each cell cluster corresponds to a plurality of objective functions, and one objective function corresponds to one target operating parameter; and optimizing the objective function of the cell cluster to obtain the target beamforming weight combination of the cell cluster under the condition that the adjusted target operating parameter is optimal may be implemented by:

optimizing each objective function respectively to obtain a plurality of initial beamforming weight combinations of the cell cluster under the condition that each target operating parameter is optimal; and determining a target beamforming weight combination of the cell cluster from the plurality of initial beamforming weight combinations and the adjustment weight corresponding to each target operating parameter.

Each initial beamforming weight combination corresponds to a respective one target operating parameter, and each target operating parameter has a respective one adjustment weight.

For example, if one cell cluster corresponds to three objective functions, and one objective function corresponds to one target operating parameter (e.g., a first objective function corresponds to a first target operating parameter, a second objective function corresponds to a second target operating parameter, and a third objective function corresponds to a third target operating parameter), then the three objective functions are optimized to obtain three initial beamforming weight combinations (e.g., when the first target operating parameter is optimal, a first initial beamforming weight combination is obtained; when the second target operating parameter is optimal, a second initial beamforming weight combination is obtained; and when the third target operating parameter is optimal, a third initial beamforming weight combination is obtained).

Further, since each target operating parameter has a respective one adjustment weight (e.g., the first target operating parameter corresponds to a first adjustment weight, the second target operating parameter corresponds to a second adjustment weight, and the third target operating parameter corresponds to a third adjustment weight), all the initial beamforming weight combinations and the adjustment weights of the corresponding target operating parameters may be subjected to weighted averaging, i.e., (first initial beamforming weight combination $\times$ first adjustment weight + second initial beamforming weight combination $\times$ second adjustment weight + third initial beamforming weight combination $\times$ third adjustment weight)/3, so that a target beamforming weight combination of the cell cluster is obtained, which can reflect an optimal allocation ratio of communication resources in the cell cluster, so that each communication cell in the cell cluster can obtain an optimal beamforming weight, thereby improving the communication efficiency.

In some embodiments, when one cell cluster is optimized with respect to a plurality of objective functions, for example, three objective functions, the plurality of objective functions may be combined into a new objective function for optimization according to "first objective function value $\times$ first adjustment weight + second objective function value $\times$ second adjustment weight + third objective function value $\times$ third adjustment weight." Alternatively, a multi-objective optimization algorithm is used to search for Pareto fronts of the first, second and third objective function values, and then the corresponding optimal beamforming weight is selected from the found Pareto fronts based on the adjustment weights of the first, second and third objective functions.

In some embodiments, the target operating parameter includes at least one of an uplink transmission parameter (e.g., an uplink reference signal receiving power, a time advance, etc.), an uplink interference parameter (e.g., an uplink loss value, an uplink reference signal to interference plus noise ratio), or direction of arrival information.

Under the condition that the target operating parameter is an uplink reference signal receiving power, the objective function is a ratio of the number of users of a communication cell with a maximum uplink reference signal receiving power in the cell cluster to the total number of users in the cell cluster, and the target operating parameter is optimal when a maximum output value of the objective function is reached.

In some exemplary implementations, under the condition that the target operating parameter is a time advance, the objective function is a ratio of the number of users of a communication cell with a minimum time advance in the cell cluster to the total number of users in the cell cluster, and the target operating parameter is optimal when a maximum output value of the objective function is reached. the time advance indicates a time delay of a terminal transmitting a data packet in an uplink.

With different target operating parameters corresponding to different objective functions, the objective functions can be adjusted in different dimensions, respectively, so that the communication resources for each communication cell in the cell cluster can be optimally utilized. Therefore, better use experience can be obtained at a plurality of terminals in each communication cell, the communication resources can be optimized, and the communication efficiency can be improved.

For example, the preset region includes five terminals (e.g., terminals 1, 2, 3, 4 and 5), and three communication cells (e.g., communication cells 1, 2 and 3), and a serving cell corresponding to each terminal is at least one of the three communication cells. At the beginning: the communication cell 1 serves the terminals 1 and 2, the communication cell 2 serves the terminals 3 and 4, and the communication cell 3 serves the terminal 5. Therefore, the communication cells 1 and 2 may be divided into a first cell cluster, while the communication cell 3 may be taken as a second cell cluster.

In the first cell cluster, most communication signals transmitted from the terminal 3 are received by the communication cell 1, and thus cause interference with the communication cell 1. By adjusting the user number ratios of the communication cell 1 and the communication cell 2 in the above method, respectively, the communication cell 1 becomes a communication cell with a minimum time advance (or a maximum uplink reference signal receiving power) in the first cell cluster, and thus serves the terminals 1, 2 and 3, while the communication cell 2 serves the terminal 4, so that the terminal 3 can receive the communication service of the communication cell 1, and camp on the communication cell (i.e., the communication cell 1) with the optimal communication quality in the uplink, thereby improving the communication efficiency.

In some exemplary implementations, under the condition that the target operating parameter is determined to be an uplink loss value, the objective function is a statistic of uplink loss values of all terminals in the cell cluster, and the target operating parameter is optimal when a minimum output value of the objective function is reached, where the statistic is a median value or an average value.

For example, the uplink loss value of each terminal in the cell cluster is iteratively updated; and based on the updated uplink loss value of each terminal and an uplink pathloss threshold, the uplink loss median value (or average value) of all terminals in the cell cluster is minimized until the statistic of the uplink loss values of all terminals in the cell cluster reaches a minimum value.

By iteratively updating the uplink loss value of each terminal in the cell cluster, the updated uplink loss value of each terminal can be reduced, so that the uplink loss median value (or average value) of all terminals in the cell cluster is minimum. Furthermore, the beamforming weight of each communication cell in the cell cluster is adjusted based on the uplink loss median of all terminals in the cell cluster, so that the resource loss of a base station transmitting communication signals to a terminal through the communication cells can be reduced, the communication quality between the base station and the terminal can be improved, and the terminals can obtain the optimal communication service.

In some exemplary implementations, under the condition that the target operating parameter is determined to be an uplink reference signal to interference plus noise ratio (SINR), the objective function is a statistic of SINR values of all terminals in the cell cluster, and the target operating parameter is optimal when a maximum output value of the objective function is reached, where the statistic is a median value or an average value.

For example, the uplink reference signal to interference plus noise ratio of each terminal in the cell cluster is iteratively updated; and based on the updated uplink SINR of each terminal and an SINR threshold, a median value (or average value) of the SINRs of all terminals in the cell cluster is maximized until the median value (or average value) of the SINRs of all terminals in the cell cluster reaches a maximum value.

In each iterative updating process, an intensity of the communication signal corresponding to each terminal can be determined based on the obtained updated uplink SINR of each terminal, so as to determine whether the terminal needs cell handover. When the updated uplink SINR of each terminal is optimal, a maximum SINR statistic of all terminals in the cell cluster can be obtained, so that the communication resources in the cell cluster can be provided at an optimal allocation ratio for all terminals in the cell cluster, and each terminal can obtain the optimal communication service, thereby improving the use experience at the terminal.

Further, the terminal may determine whether cell handover is needed based on the updated beamforming weight of each communication cell, so that the terminal can be switched to the communication cell with the optimal communication quality in the uplink, thereby improving the communication efficiency.

By selecting and determining the objective function corresponding to the uplink interference parameter (such as the uplink loss value and/or SINR) depending on different situations, the communication resources in each cell cluster can be optimally allocated, so that each communication cell in each cell cluster can provide communication services for the terminal camping therein with the optimal communication resources, thereby improving the use experience at each terminal.

In some exemplary implementations, optimizing the objective function of the cell cluster includes: optimizing the objective function of the cell cluster through an optimization algorithm.

The optimization algorithm includes: an ant colony algorithm, an evolutionary algorithm and a particle swarm algorithm.

A basic idea of the ant colony algorithm is that: an optimal solution corresponding to the objective function is represented by a walking path of an ant, and all paths of a whole ant colony form a solution space of the objective function. Since an ant on a shorter path releases more pheromones, and a concentration of pheromones accumulated on the shorter path is gradually increased along with the advance of time, more and more ants will select that path. Finally, the whole ant colony will converge on an optimal path under the action of positive feedback, which path corresponds to an optimal solution of the objective function.

The evolutionary algorithm includes a genetic algorithm, genetic programming, evolutionary programming, evolutionary strategies, and the like. Solutions of the objective function are searched based on biological evolution mechanisms such as natural selection, natural inheritance and the like. The iterative processing of the optimal solution of the objective function includes: firstly, giving a set of initial solutions of the objective function; evaluating performance of the current set of initial solutions; selecting a preset number of solutions from the current set of initial solutions as a basis for the iterated solutions; then processing the preset number of solutions to obtain the iterated solution; and ending the process if the iterated solutions meet the requirements (for example, the iterated solutions enable the target operating parameter to be optimal); otherwise, taking the iterated solutions as new initial solutions and repeating the iteration operation.

In addition to the robustness and capability of adapting to processing scenes under different environments, the evolutionary algorithm can further provide a coding scheme for the whole parameter space of the objective function, and start searching from a set of initial solutions, thereby having wide applicability, high non-linearity, easy modifiability and parallelism.

The particle swarm algorithm includes: simulating a current position vector of a particle i to obtain communication link quality information of a plurality of communication cells in one cell cluster; then constructing an objective function (e.g., fi(t)) of the cell cluster based on at least one target operating parameter corresponding to the cell cluster; for an iteration number of times t of the particle swarm algorithm, calculating an output value corresponding to the objective function fi(t) from the current position vector of the particle i; obtaining a position vector corresponding to a historical optimal value of the objective function fi(t); and when the iteration number of times t reaches a preset maximum iteration number of times T, obtaining historical optimal positions of all particles based on position vectors corresponding to all the particles, where the historical optimal positions represent a set of weight scheme codes corresponding to the plurality of communication cells in the cell cluster, respectively, for example, a target beamforming weight combination corresponding to the cell cluster, where i and t are both integers greater than or equal to 1.

Based on the above different iterative adjustment modes, different objective functions may be adopted and solved depending on the actual application scenarios corresponding to the plurality of communication cells in each cell cluster, to obtain an optimal solution of the corresponding objective function. That is, based on the target beamforming weight combination corresponding to each cell cluster, the beamforming weight of each communication cell in each cell cluster can be accurately adjusted, so that the terminal in each communication cell can camp on the communication cell with the optimal uplink communication quality, thereby improving the communication efficiency.

In some exemplary implementations, acquiring any cell cluster within the preset region and at least one target operating parameter corresponding to the cell cluster includes: acquiring communication link quality information of a plurality of communication cells in the preset region; analyzing the communication link quality information of the plurality of communication cells, to determine an overlapping coverage between any two adjacent ones of the plurality of communication cells; and performing cell cluster division on the plurality of communication cells according to the overlapping coverage, to obtain at least one cell cluster and at least one target operating parameter corresponding to each cell cluster.

A sum of the number of communication cells in all cell clusters is the same as the number of the plurality of communication cells.

For example, the overlapping coverages of the plurality of communication cells are clustered in a hierarchical clustering manner to obtain at least one cell cluster. Each cell cluster includes at least two communication cells, and the overlapping coverage of every two communication cells exceeds a preset coverage threshold.

By analyzing the communication link quality information of the plurality of communication cells to determine an overlapping coverage between any two adjacent ones of the plurality of communication cells, whether there is an overlapping coverage between the communication cells, and thus whether the communication cells interfere with each other, can be determined. By dividing the plurality of communication cells into at least one cell cluster based on the overlapping coverage, parameter adjustment can be conveniently performed on the communication cells in units of cell clusters, thereby improving the adjustment efficiency of communication parameters.

In some embodiments, the plurality of communication cells include at least one communication cell to be processed and neighboring cells thereof. A plurality of terminals camp on the communication cell to be processed.

Under the condition that the target operating parameter is determined to be an uplink loss value, analyzing the communication link quality information of the plurality of communication cells, to determine an overlapping coverage between any two adjacent ones of the plurality of communication cells may be implemented by: determining a first threshold for an uplink loss of a preset coverage of a communication cell, a second threshold for an uplink loss of an overlapping coverage of a preset neighboring cell, and a preset third threshold of an uplink loss difference between the communication cell and the neighboring cell, respectively; determining an uplink loss value of each terminal in a communication cell to be processed, an uplink loss value of each terminal in a neighboring cell of the communication cell to be processed, and a link loss difference between the uplink loss value of the terminal in the communication cell to be processed and the uplink loss value of the terminal in the neighboring cell of the communication cell to be processed; counting the number of first terminals with an uplink loss value in the communication cell to be processed greater than or equal to the first threshold, the number of second terminals with an uplink loss value in the neighboring cell of the communication cell to be processed greater than or equal to the second threshold, and the number of third terminals with an uplink loss difference greater than or equal to the third threshold; and determining an overlapping coverage between the cell to be processed and the neighboring cell based on at least two of the number of first terminals, the number of second terminals or the number of third terminals.

For example, if the uplink loss value of the terminal in the communication cell to be processed $v_i$ is set to A, and the uplink loss value of the terminal in the neighboring cell $v_j$ of the communication cell to be processed is set to B, then the following three conditions can be obtained:

condition 1: A is greater than or equal to the first threshold;
condition 2: B is greater than or equal to the second threshold; and
condition 3: the difference (A-B) is greater than or equal to the third threshold.

Correspondingly, the number of first terminals is the number of terminals meeting the condition 1; the number of second terminals is the number of terminals meeting the condition 2; and the number of third terminals is the number of terminals meeting the condition 3. For the communication cell to be processed $v_i$ and its neighboring cell $v_j$, the overlapping coverage $e(v_i, v_j)$ between the communication cell to be processed $v_i$ and the neighboring cell $v_j$ of the communication cell to be processed may be expressed by the following equation (1):

$$e(v_i, v_j) = \frac{\text{The number of terminals meeting at least two of the conditions 1, 2 or 3}}{\text{The number of terminals meeting the condition 1 in the communication cell } v_i \text{ to be processed}} \tag{1}$$

where i and j are both integers greater than or equal to 1.

By calculating the overlapping coverage in the above method, the coverage of communication signals between two communication cells can be accurately represented to facilitate accurate knowledge about whether the communication cells have overlapping signals, and subsequent classification of each communication cell into cell clusters based on the overlapping coverage, so that the communication cells in one cell cluster are cells with an overlapping coverage meeting the same condition, for example, the overlapping coverage between the communication cells exceeds a preset coverage threshold and the like, thereby facilitating the processing of the communication cells in one cell cluster and improving the processing efficiency of communication cells.

A device according to an embodiment of the present disclosure is described in detail below with reference to the accompanying drawings. FIG. 2 is a block diagram of a beamforming weight adjustment apparatus according to an embodiment of the present disclosure.

As shown in FIG. 2, the beamforming weight adjustment apparatus 200 includes, but is not limited to, an acquisition module 201, an adjustment module 202, and an updating module 203.

The acquisition module 201 is configured to acquire any cell cluster within a preset region and at least one target operating parameter corresponding to the cell cluster.

The target operating parameter is an operating parameter corresponding to an uplink signal.

The adjustment module 202 is configured to adjust the beamforming weight of each communication cell in the cell cluster based on the at least one target operating parameter corresponding to the cell cluster, to obtain a target beamforming weight of each communication cell when the target operating parameter is optimal.

The updating module 203 is configured to update a real-time beamforming weight of each communication cell based on the target beamforming weight of each communication cell.

It should be noted that the beamforming weight adjustment apparatus 200 in this embodiment can implement the method for adjusting beamforming weight according to any embodiment of the present disclosure.

According to the device provided in the embodiment of the present disclosure, by the acquisition module acquiring any cell cluster within a preset region and at least one target operating parameter corresponding to the cell cluster, where the target operating parameter is an operating parameter corresponding to an uplink signal, each cell cluster can be conveniently analyzed to optimize the communication resources of a plurality of communication cells in each cell cluster; by the adjustment module adjusting the beamforming weight of each communication cell in the cell cluster based on the at least one target operating parameter corresponding to the cell cluster, an optimal target operating parameter of each cell cluster can be obtained, so that a target beamforming weight of each communication cell when the target operating parameter is optimal can be obtained; and then, by the updating module updating a real-time beamforming weight of each communication cell based on the target beamforming weight of each communication cell, the real-time beamforming weight of each communication cell can meet the requirement of communication link quality in the preset region, so that the terminal can camp on the communication cell with the optimal communication quality in the uplink, thereby improving the communication efficiency.

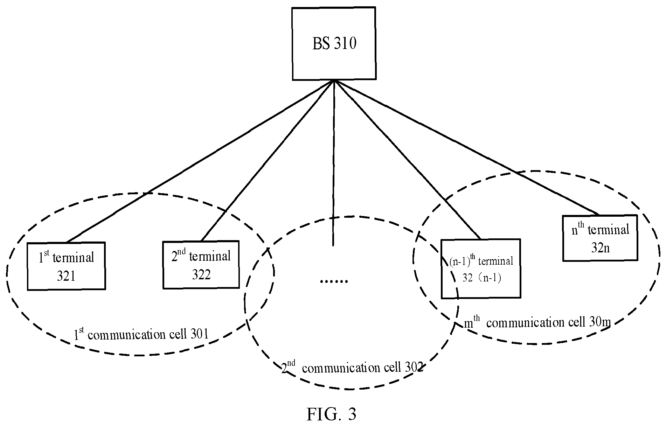

FIG. 3 is a block diagram of a beamforming weight adjustment system according to an embodiment of the present disclosure. As shown in FIG. 3, the beamforming weight adjustment system includes, but is not limited to: a base station 310, and a plurality of terminals (e.g., a first terminal 321, a second terminal 322, ..., an $(n-1)^{th}$ terminal 32(n-1), and an $n^{th}$ terminal 32n, where n represents the number of terminals, and n is an integer greater than or equal to 1).

The base station 310 may be configured with a plurality of communication cells (e.g., a first communication cell 301, a second communication cell 302, ..., and an $m^{th}$ communication cell 30m, where m represents the number of communication cells, and m is an integer greater than or equal to 1). For example, the first communication cell 301 provides communication services for the first terminal 321 and the second terminal 322;•••, the $m^{th}$ communication cell 30m provides communication services for the $(n-1)^{th}$ terminal 32 (n-1) and the $n^{th}$ terminal 32n.

It should be noted that the number of terminals camping on each communication cell is variable, and may be determined according to a real-time location of each terminal and the quality of communication signals received by each terminal from the base station 310.

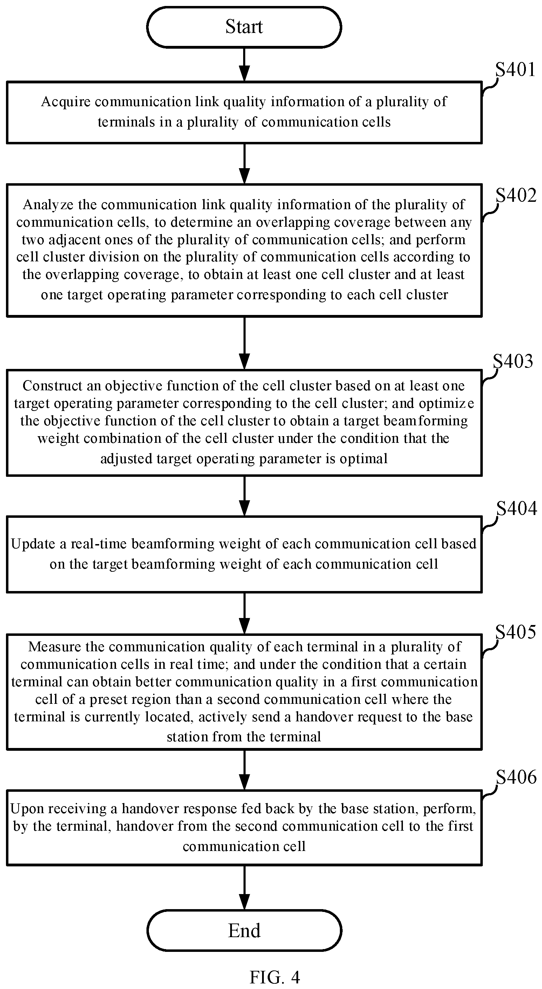

FIG. 4 is a schematic flowchart showing an operating method of a beamforming weight adjustment system according to an embodiment of the present disclosure. As shown in FIG. 4, the operating method of the beamforming weight adjustment system includes, but is not limited to, the following operations S401 to S406.

Operation S401 includes acquiring communication link quality information of a plurality of communication cells in the preset region.

The communication link quality information is measurement information reported by a plurality of terminals in each communication cell. For example, the communication link quality information includes: at least one of an uplink transmission parameter (e.g., an uplink reference signal receiving power, a time advance, etc.), an uplink interference parameter (e.g., an uplink loss value, an uplink reference signal to interference plus noise ratio), or direction of arrival information.

Operation S402 includes analyzing the communication link quality information of the plurality of communication cells, to determine an overlapping coverage between any two adjacent ones of the plurality of communication cells; and performing cell cluster division on the plurality of communication cells according to the overlapping coverage, to obtain at least one cell cluster and at least one target operating parameter corresponding to each cell cluster.

The communication link quality information includes, but is not limited to: an uplink reference signal receiving power, a time advance and the like, an uplink loss value, an uplink reference signal to interference plus noise ratio, and direction of arrival information.

The plurality of communication cells include at least one communication cell to be processed and neighboring cells thereof. A plurality of terminals camp on the communication cell to be processed. Under the condition that the communication link quality information is determined to include an uplink loss value, analyzing the communication link quality information of the plurality of communication cells, to determine the overlapping coverage between any two adjacent ones of the plurality of communication cells includes:

determining a first threshold for an uplink loss of a preset coverage of a communication cell, a second threshold for an uplink loss of an overlapping coverage of a preset neighboring cell, and a preset third threshold of an uplink loss difference between the communication cell and the neighboring cell, respectively; determining an uplink loss value of each terminal in a communication cell to be processed, an uplink loss value of each terminal in a neighboring cell of the communication cell to be processed, and a link loss difference between the uplink loss value of the terminal in the communication cell to be processed and the uplink loss value of the terminal in the neighboring cell of the communication cell to be processed; counting the number of first terminals with an uplink loss value in the communication cell to be processed greater than or equal to the first threshold, the number of second terminals with an uplink loss value in the neighboring cell of the communication cell to be processed greater than or equal to the second threshold, and the number of third terminals with an uplink loss difference greater than or equal to the third threshold; and determining an overlapping coverage between the cell to be processed and the neighboring cell based on at least two of the number of first terminals, the number of second terminals or the number of third terminals.

For example, if the uplink loss value of the terminal in the communication cell to be processed $v_i$ is set to A, and the uplink loss value of the terminal in the neighboring cell $v_j$ of the communication cell to be processed is set to B, then the following three conditions can be obtained:

condition 1: A is greater than or equal to the first threshold;
condition 2: B is greater than or equal to the second threshold; and
condition 3: the difference (A-B) is greater than or equal to the third threshold.

For the communication cell to be processed $v_i$ and its neighboring cell $v_j$, the overlapping coverage $e(v_i, v_j)$ between the communication cell to be processed $v_i$ and the neighboring cell $v_j$ of the communication cell to be processed may be expressed by equation (1).

Further, the overlapping coverages of the plurality of communication cells are clustered in a hierarchical clustering manner to obtain at least one cell cluster. Each cell cluster includes at least two communication cells, and the overlapping coverage of every two communication cells exceeds a preset coverage threshold.

In some exemplary embodiments, the uplink loss value in the three conditions corresponding to equation (1) may be replaced by any communication link quality information of the communication cell, for example, an uplink reference signal receiving power, a time advance, an uplink reference signal to interference plus noise ratio, direction of arrival information, or the like.

For example, when the uplink loss value is replaced by an uplink reference signal receiving power, the foregoing three conditions are changed to:

updated condition 1: C is greater than or equal to a first preset receiving power threshold of the communication cell;
updated condition 2: D is greater than or equal to a second preset receiving power threshold of the neighboring cell of the communication cell; and

updated condition 3: the difference (C-D) is greater than or equal to a preset receiving power difference threshold, where C represents the uplink reference signal receiving power of the terminal in a certain communication cell (e.g., the communication cell to be processed $v_i$); and D represents the uplink reference signal receiving power of the terminal in the neighboring cell of the communication cell (e.g., the neighboring cell $v_j$ of the communication cell to be processed).

For example, the first preset receiving power threshold of the communication cell is set to 90dB, the second preset receiving power threshold of the neighboring cell of the communication cell is set to 90dB, and the preset receiving power difference threshold is set to 6dB, so it may be obtained that the updated condition 1 is C greater than or equal to 90dB, the updated condition 2 is D greater than or equal to 90dB, and the updated condition 3 is the difference (C-D) greater than or equal to 6dB. Then, the updated equation (1) is expressed as:

$$e(v_i, v_j) = \frac{\text{The number of terminals meeting at least two of the updated conditions 1, 2 or 3}}{\text{The number of terminals meeting the updated condition 1 in the communication cell } v_i \text{ to be processed}}$$

$$(2)$$

With equation (2), the overlapping coverage between the communication cell $v_i$ to be processed and the neighboring cell $v_j$ of the communication cell to be processed can be more accurately determined.

Operation S403 includes constructing an objective function of the cell cluster based on at least one target operating parameter corresponding to the cell cluster; and optimizing the objective function of the cell cluster to obtain a target beamforming weight combination of the cell cluster under the condition that the adjusted target operating parameter is optimal.

One or more target operating parameters may be included. The target beamforming weight combination includes target beamforming weights corresponding to a plurality of communication cells in the cell cluster. For example, the target beamforming weight combination includes: a synchronized signal block (SSB) beamforming weight corresponding to each of the plurality of communication cells. The SSB is a signal block with synchronized time, frequency and phase, and includes necessary control information for device access, system information, radio resource control (RRC) connection, and the like.

In addition to timing and frequency synchronization, as well as location and mobility management, the SSB beam in a 5G NR network is further used for accessing and measuring reference signals. Compared with other beams, the SSB beam can support better beam capture, extend the coverage area of communication signals, and improve the network throughput.

In some exemplary embodiments, under the condition that the target operating parameter is an uplink reference signal receiving power, the objective function is a ratio of the number of users of a communication cell with a maximum uplink reference signal receiving power in the cell cluster to the total number of users in the cell cluster, and the target operating parameter is optimal when a maximum output value of the objective function is reached.

For example, based on the uplink transmission parameters corresponding to the communication cells in each cell cluster, a target serving cell is selected from the plurality of communication cells in each cell cluster. The target serving cell is a communication cell with the maximum uplink reference signal receiving power selected from each cell cluster. Then, a ratio of the number of users in the target serving cell to the total number of users in the cell cluster is calculated, and when the ratio reaches a maximum value, it is determined that the target operating parameter is optimal.

In some exemplary embodiments, under the condition that the target operating parameter is a time advance, the objective function is a ratio of the number of users of a communication cell with a minimum time advance in the cell cluster to the total number of users in the cell cluster, and the target operating parameter is optimal when a maximum output value of the objective function is reached.

The time advance is a time delay of a terminal transmitting a data packet in an uplink.

For example, based on the uplink transmission parameters corresponding to the communication cells in each cell cluster, a target serving cell is selected from the plurality of communication cells in each cell cluster. The target serving cell is a communication cell with a minimum time advance selected from each cell cluster. Then, a ratio of the number of users in the target serving cell to the total number of users in the cell cluster is calculated, and when the ratio reaches a maximum value, it may be determined that the target operating parameter is optimal.

In some exemplary embodiments, under the condition that the target operating parameter is determined to be an uplink loss value, the objective function is a statistic of uplink loss values of all terminals in the cell cluster, and the target operating parameter is optimal when a minimum output value of the objective function is reached, where the statistic is a median value or an average value.

For example, the objective function is a function using the uplink loss value of the terminal as an input parameter and the uplink loss median value (or average value) of all terminals in each cell cluster as an output parameter, so that the uplink loss median value (or average value) of all terminals in each cell cluster is minimum.

In some exemplary embodiments, under the condition that the target operating parameter is determined to be an uplink SINR, the objective function is a statistic of SINR values of all terminals in the cell cluster, and the target operating parameter is optimal when a maximum output value of the objective function is reached.

The statistic is a median value or an average value. For example, the objective function is a function using the uplink SINR of the terminal as an input parameter and the uplink SINR median value (or average value) of all terminals in each cell cluster as an output parameter, so that the uplink SINR median value (or average value) of all terminals in each cell cluster is maximum.

In some exemplary implementations, optimizing the objective function of the cell cluster includes: optimizing the objective function of the cell cluster through an optimization algorithm. The optimization algorithm includes: an ant colony algorithm, an evolutionary algorithm and a particle swarm algorithm.

Operation S404 includes updating a real-time beamforming weight of each communication cell based on the target beamforming weight of each communication cell.

When the real-time beamforming weight of each communication cell is updated to: a beamforming weight in the issued target beamforming weight combination corresponding to each cell cluster, the communication quality corresponding to the plurality of terminals in each communication cell is changed as the real-time beamforming weight corresponding to each communication cell is changed.

Operation S405 includes measuring the communication quality of each terminal in a plurality of communication cells in real time; and under the condition that a certain terminal can obtain better communication quality in a first communication cell of a preset region than a second communication cell where the terminal is currently located, actively sending a handover request to the base station from the terminal.

Operation S406 includes upon receiving a handover response fed back by the base station, performing, by the terminal, handover from the second communication cell to the first communication cell.

Then, the terminal is handed over from the second communication cell to the first communication cell, i.e., the communication cell with the optimal uplink communication quality, thereby improving the communication efficiency.

In some embodiments, the uplink reference signal receiving power, the time advance, the uplink loss value, the uplink reference signal to interference plus noise ratio, and the DOA information within the preset region are firstly obtained. Then, the overlapping coverage between any two adjacent ones of the plurality of communication cells in the preset region is determined by equation (2), where based on a hierarchical clustering manner, at least two communication cells with an overlapping coverage exceeding a preset coverage threshold are selected as one cell cluster, while other communication cells are taken as another cell cluster, and then the plurality of communication cells in each cell cluster are processed.

Under the condition that the target operating parameter is an uplink reference signal receiving power, the objective function is a ratio of the number of users of a communication cell with a maximum uplink reference signal receiving power in the cell cluster to the total number of users in the cell cluster, and the target operating parameter is optimal when a maximum output value of the objective function is reached.

The objective function of the cell cluster is optimized through an ant colony algorithm, to obtain a target beamforming weight combination of the cell cluster under the condition that the adjusted target operating parameter is optimal. Then, beamforming weights in the target beamforming weight combination corresponding to the cell cluster are issued to the communication cells in the cell cluster.

In some embodiments, the uplink reference signal receiving power, the time advance and the uplink loss value within the preset region are firstly obtained. Then, the overlapping coverage between any two adjacent ones of the plurality of communication cells in the preset region is determined by equation (2), where based on a hierarchical clustering manner, at least two communication cells with an overlapping coverage exceeding a preset coverage threshold are selected as one cell cluster, while other communication cells are taken as another cell cluster, and then the plurality of communication cells in each cell cluster are processed.

Under the condition that the target operating parameter is determined to be an uplink loss value, the objective function is a statistic of uplink loss values of all terminals in the cell cluster, and the target operating parameter is optimal when a minimum output value of the objective function is reached, where the statistic is a median value or an average value.

The objective function of the cell cluster is optimized through an evolutionary algorithm, to obtain a target beamforming weight combination of the cell cluster under the condition that the adjusted target operating parameter is optimal. Then, beamforming weights in the target beamforming weight combination corresponding to the cell cluster are issued to the communication cells in the cell cluster.

In some embodiments, the uplink reference signal receiving power, the time advance and the uplink loss value within the preset region are firstly obtained. Then, the overlapping coverage between any two adjacent ones of the plurality of communication cells in the preset region is determined by equation (2), where based on a hierarchical clustering manner, at least two communication cells with an overlapping coverage exceeding a preset coverage threshold are selected as one cell cluster, while other communication cells are taken as another cell cluster, and then the plurality of communication cells in each cell cluster are processed.

When the target operating parameter is determined to be a time advance, the objective function is a ratio of the number of users of a communication cell with a minimum time advance in the cell cluster to the total number of users in the cell cluster, and the target operating parameter is optimal when a maximum output value of the objective function is reached. The time advance indicates a time delay of a terminal transmitting a data packet in an uplink.

The objective function of the cell cluster is optimized through an evolutionary algorithm, to obtain a target beamforming weight combination of the cell cluster under the condition that the adjusted target operating parameter is optimal. Then, beamforming weights in the target beamforming weight combination corresponding to the cell cluster are issued to the communication cells in the cell cluster.

In some embodiments, the uplink reference signal receiving power, the time advance and the uplink loss value within the preset region are firstly obtained. Then, the overlapping coverage between any two adjacent ones of the plurality of communication cells in the preset region is determined by equation (2), where based on a hierarchical clustering manner, at least two communication cells with an overlapping coverage exceeding a preset coverage threshold are selected as one cell cluster, while other communication cells are taken as another cell cluster, and then the plurality of communication cells in each cell cluster are processed.

Under the condition that the target operating parameter is determined to be an uplink SINR, the objective function is a statistic of SINR values of all terminals in the cell cluster, and the target operating parameter is optimal when a maximum output value of the objective function is reached, where the statistic is a median value or an average value.

The objective function of the cell cluster is optimized through an evolutionary algorithm, to obtain a target beamforming weight combination of the cell cluster under the condition that the adjusted target operating parameter is optimal. Then, beamforming weights in the target beamforming weight combination corresponding to the cell cluster are issued to the communication cells in the cell cluster.

In this embodiment, by obtaining the communication link quality information (e.g., the uplink reference signal receiving power, the time advance, the uplink loss value, the uplink reference signal to interference plus noise ratio, the DOA information, and the like) of a plurality of communication cells in the preset region, the knowledge about whether each communication cell is interfered with other communication cells can be obtained, so as to facilitate subsequent adjustment of the beamforming weight of each communication cell. By analyzing the communication link quality information of the plurality of communication cells, to determine an overlapping coverage between any two adjacent ones of the plurality of communication cells; and performing cell cluster division on the plurality of communication cells according to the overlapping coverage, to obtain at least one cell cluster and at least one target operating parameter corresponding to each cell cluster, parameter adjustment can be conveniently performed on the communication cells in units of cell clusters, thereby improving the adjustment efficiency of communication parameters. By constructing an objective function of the cell cluster based on at least one target operating parameter corresponding to the cell cluster; and optimizing the objective function of the cell cluster to obtain a target beamforming weight combination of the cell cluster under the condition that the adjusted target operating parameter is optimal, where the target beamforming weight combination includes target beamforming weights (e.g., SSB beamforming weights) corresponding to a plurality of communication cells in the cell cluster, the obtained target beamforming weight combination can meet the requirement of communication link quality in the preset region, thereby improving the use efficiency of communication resources in the cell cluster. By updating a real-time beamforming weight of each communication cell based on the target beamforming weight of each communication cell, the terminal can camp on the communication cell with the optimal communication quality in the uplink, which improves the uplink experience at the terminal, while reducing the interference of the terminal with the neighboring cell and optimizing the uplink communication quality of the network.

It should be noted that the present disclosure is not limited to the specific configurations and processing described in the above embodiments and shown in the figures. For convenience and simplicity of description, detailed description of a known method is omitted here, and for the specific working processes of the system, the modules and the units described above, reference may be made to corresponding processes in the foregoing method embodiments, which are not repeated here.

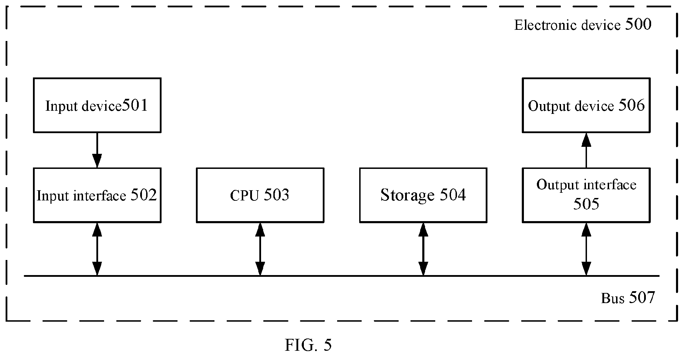

FIG. 5 is a block diagram of an electronic device according to an embodiment of the present disclosure. As shown in FIG. 5, the electronic device 500 includes an input device 501, an input interface 502, a central processing unit 503, a storage 504, an output interface 505, an output device 506, and a bus 507. The input interface 502, the central processing unit 503, the storage 504, and the output interface 505 are connected to each other via a bus 507, and the input device 501 and the output device 506 are connected to the bus 507 via the input interface 502 and the output interface 505, respectively, and further connected to other components of the electronic device 500.

Specifically, the input device 501 receives input information from the outside, and transmits the input information to the central processing unit 503 through the input interface 502; the central processing unit 503 processes the input information based on computer-executable instructions stored in the storage 504 to generate output information, stores the output information temporarily or permanently on the storage 504, and then transmits the output information to the output device 506 through the output interface 505; and the output device 506 outputs the output information outside of the electronic device 500 for use by a user.

In an embodiment, the electronic device shown in FIG. 5 may include: a storage configured to store a program; and a processor configured to execute the program stored in the storage to implement the method for adjusting beamforming weight according to any of the above embodiments.

In one embodiment, the electronic device shown in FIG. 5 may be implemented as a beamforming weight adjustment system, which may include: a storage configured to store a program; and a processor configured to execute the program stored in the storage to implement the method for adjusting beamforming weight according to any of the above embodiments.

An embodiment of the present disclosure further provides a readable storage medium having a computer program stored thereon which, when executed by a processor, causes the method for adjusting beamforming weight according to any embodiment of the present disclosure to be implemented.

The above are merely exemplary embodiments of the present disclosure and not intended to limit the scope of the present disclosure. In general, the various embodiments of the present disclosure may be implemented in hardware or special purpose circuits, software, logic or any combination thereof. For example, some aspects may be implemented in hardware, while other aspects may be implemented in firmware or software which may be executed by a controller, a microprocessor or any other computing device, although the present disclosure is not limited thereto.

Embodiments of the present disclosure may be implemented by a processor executing computer program instructions, for example, in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

The block diagrams of any logic flow in the figures of the present disclosure may represent program operations, or may represent interconnected logic circuits, modules, and functions, or may represent a combination of program operations and logic circuits, modules, and functions. The computer program may be stored on a storage. The storage may be of any type suitable to the local technical environment and may be implemented in any suitable data storage technology, such as but not limited to, read only memories (ROMs), random access memories (RAMs), optical storage devices or systems (digital versatile discs (DVDs), compact discs (CDs)), etc. The computer-readable medium may include a non-transitory storage medium. The processor may be of any type suitable to the local technical environment, such as but not limited to, general purpose computers, dedicated computers, microprocessors, digital signal processors (DSPs), application specific integrated circuits (ASICs), field programmable gate arrays (FGPAs), and processors based on multi-core processor architecture.

The foregoing has provided by way of exemplary and non-limiting examples a detailed description of exemplary embodiments of the present disclosure. Various modifications and adaptations to the foregoing embodiments may become apparent to those skilled in the art in view of the accompanying drawings and the appended claims, without departing from the scope of the present disclosure. Accordingly, the proper scope of the present disclosure is to be determined according to the claims.

**Claims**

1. A method for adjusting beamforming weight, comprising:

    acquiring any cell cluster within a preset region and at least one target operating parameter corresponding to the cell cluster, wherein the target operating parameter is an operating parameter corresponding to an uplink signal;
    adjusting beamforming weights of communication cells in the cell cluster based on the at least one target operating parameter corresponding to the cell cluster, to obtain respective target beamforming weights of the communication cells when the target operating parameter is optimal; and
    updating real-time beamforming weights of the communication cells based on the respective target beamforming weights of the communication cells.

2. The method according to claim 1, wherein adjusting the beamforming weights of communication cells in the cell cluster based on the at least one target operating parameter corresponding to the cell cluster, to obtain the respective target beamforming weights of the communication cells when the target operating parameter is optimal comprises:

    constructing an objective function of the cell cluster based on at least one target operating parameter corresponding to the cell cluster; and
    optimizing the objective function of the cell cluster to obtain a target beamforming weight combination of the cell cluster under the condition that the adjusted target operating parameter is optimal, wherein the target beamforming weight combination comprises target beamforming weights corresponding to a plurality of communication cells in the cell cluster.

3. The method according to claim 2, wherein a plurality of target operating parameters are comprised, each cell cluster corresponds to a plurality of objective functions, and one objective function corresponds to one target operating parameter;
optimizing the objective function of the cell cluster to obtain the target beamforming weight combination of the cell cluster under the condition that the adjusted target operating parameter is optimal comprises:

optimizing each objective function to obtain a plurality of initial beamforming weight combinations of the cell cluster under the condition that each target operating parameter is optimal, wherein each initial beamforming weight combination corresponds to one target operating parameter, and each target operating parameter has an adjustment weight; and
determining a target beamforming weight combination of the cell cluster from the plurality of initial beamforming weight combinations and the adjustment weight corresponding to each target operating parameter.

4. The method according to claim 2, wherein under the condition that the target operating parameter is an uplink reference signal receiving power, the objective function is a ratio of a number of users of a communication cell with a maximum uplink reference signal receiving power in the cell cluster to a total number of users in the cell cluster, and the target operating parameter is optimal when a maximum output value of the objective function is reached.

5. The method according to claim 2, wherein under the condition that the target operating parameter is a time advance, the objective function is a ratio of a number of users of a communication cell with a minimum time advance in the cell cluster to a total number of users in the cell cluster, and the target operating parameter is optimal when a maximum output value of the objective function is reached; wherein the time advance indicates a time delay of a terminal transmitting a data packet in an uplink.

6. The method according to claim 2, wherein under the condition that the target operating parameter is determined to be an uplink loss value, the objective function is a statistic of uplink loss values of all terminals in the cell cluster, and the target operating parameter is optimal when a minimum output value of the objective function is reached, wherein the statistic is a median value or an average value.

7. The method according to claim 2, wherein under the condition that the target operating parameter is determined to be an uplink reference signal to interference plus noise ratio, SINR, the objective function is a statistic of SINR values of all terminals in the cell cluster, and the target operating parameter is optimal when a maximum output value of the objective function is reached, wherein the statistic is a median value or an average value.

8. The method according to claim 2, wherein optimizing the objective function of the cell cluster comprises:

optimizing the objective function of the cell cluster through an optimization algorithm; wherein
the optimization algorithm comprises: an ant colony algorithm, an evolutionary algorithm and a particle swarm algorithm.

9. The method according to any one of claims 1 to 8, wherein acquiring any cell cluster within the preset region and at least one target operating parameter corresponding to the cell cluster comprises:

acquiring communication link quality information of a plurality of communication cells in the preset region;
analyzing the communication link quality information of the plurality of communication cells, to determine an overlapping coverage between any two adjacent ones of the plurality of communication cells; and
performing cell cluster division on the plurality of communication cells according to the overlapping coverage, to obtain at least one cell cluster and at least one target operating parameter corresponding to each cell cluster, wherein a sum of a number of communication cells in all cell clusters is the same as a number of the plurality of communication cells.

10. An electronic device, comprising:

one or more processors; and

a storage having one or more programs stored thereon which, when executed by the one or more processors, cause the one or more processors to implement the method for adjusting beamforming weight according to any one of claims 1 to 9.

11. A readable storage medium, wherein the readable storage medium has a computer program stored thereon which, when executed by a processor, causes the method for adjusting beamforming weight according to any one of claims 1 to 9 to be implemented.

```
                    ┌─────────────────────┐
                    │        Start        │
                    └─────────────────────┘
                               │
                               ▼                                    S101
┌─────────────────────────────────────────────────────────────┐
│   Acquire any cell cluster within a preset region and at least one target │
│        operating parameter corresponding to the cell cluster   │
└─────────────────────────────────────────────────────────────┘
                               │
                               ▼                                    S102
┌─────────────────────────────────────────────────────────────┐
│  Adjust beamforming weights of communication cells in the cell cluster │
│ based on the at least one target operating parameter corresponding to the │
│  cell cluster, to obtain respective target beamforming weights of the │
│  communication cells when the target operating parameter is optimal │
└─────────────────────────────────────────────────────────────┘
                               │
                               ▼                                    S103
┌─────────────────────────────────────────────────────────────┐
│   Update real-time beamforming weights of the communication cells │
│       based on the respective target beamforming weights of the │
│                     communication cells             │
└─────────────────────────────────────────────────────────────┘
                               │
                               ▼
                    ┌─────────────────────┐
                    │         End         │
                    └─────────────────────┘
```

FIG. 1

```
┌─────────────────────────────────────────────────────────────┐
│                                                             │
│  ┌──────────────┐    ┌──────────────┐   ┌──────────────┐   │
│  │  Acquisition │    │  Adjustment  │   │Updating Module│   │
│  │  Module 201  │────│  Module 202  │───│     203       │   │
│  └──────────────┘    └──────────────┘   └──────────────┘   │
│                                                             │
│      Beamforming Weight Adjustment Apparatus 200           │
└─────────────────────────────────────────────────────────────┘
```

FIG. 2

BS 310

1st terminal 321

2nd terminal 322

......

(n-1)th terminal 32 (n-1)

nth terminal 32n

1st communication cell 301

2nd communication cell 302

mth communication cell 30m

FIG. 3

```
                          ┌─────────────┐
                          │    Start    │
                          └─────────────┘
                                 │
                                 ▼                          S401
  ┌────────────────────────────────────────────────────────┐
  │  Acquire communication link quality information of a    │
  │  plurality of terminals in a plurality of communication │
  │                        cells                            │
  └────────────────────────────────────────────────────────┘
                                 │
                                 ▼                          S402
  ┌────────────────────────────────────────────────────────┐
  │  Analyze the communication link quality information of  │
  │  the plurality of communication cells, to determine an  │
  │  overlapping coverage between any two adjacent ones of   │
  │  the plurality of communication cells; and perform       │
  │  cell cluster division on the plurality of communication │
  │  cells according to the overlapping coverage, to obtain  │
  │  at least one cell cluster and at least one target       │
  │  operating parameter corresponding to each cell cluster  │
  └────────────────────────────────────────────────────────┘
                                 │
                                 ▼                          S403
  ┌────────────────────────────────────────────────────────┐
  │  Construct an objective function of the cell cluster    │
  │  based on at least one target operating parameter        │
  │  corresponding to the cell cluster; and optimize         │
  │  the objective function of the cell cluster to obtain a  │
  │  target beamforming weight combination of the cell       │
  │  cluster under the condition that the adjusted target    │
  │  operating parameter is optimal                          │
  └────────────────────────────────────────────────────────┘
                                 │
                                 ▼                          S404
  ┌────────────────────────────────────────────────────────┐
  │  Update a real-time beamforming weight of each          │
  │  communication cell based on the target beamforming     │
  │  weight of each communication cell                      │
  └────────────────────────────────────────────────────────┘
                                 │
                                 ▼                          S405
  ┌────────────────────────────────────────────────────────┐
  │  Measure the communication quality of each terminal in  │
  │  a plurality of communication cells in real time; and    │
  │  under the condition that a certain terminal can obtain  │
  │  better communication quality in a first communication   │
  │  cell of a preset region than a second communication     │
  │  cell where the terminal is currently located, actively  │
  │  send a handover request to the base station from the    │
  │  terminal                                                │
  └────────────────────────────────────────────────────────┘
                                 │
                                 ▼                          S406
  ┌────────────────────────────────────────────────────────┐
  │  Upon receiving a handover response fed back by the     │
  │  base station, perform, by the terminal, handover from  │
  │  the second communication cell to the first             │
  │  communication cell                                     │
  └────────────────────────────────────────────────────────┘
                                 │
                                 ▼
                          ┌─────────────┐
                          │     End     │
                          └─────────────┘
```

FIG. 4

Electronic device 500

Input device501

Input interface 502

CPU 503

Storage 504

Output interface 505

Output device 506

Bus 507

FIG. 5

## INTERNATIONAL SEARCH REPORT

| International application No. |
| --- |
| **PCT/CN2024/112695** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W,H04Q,H04B,G06N

Documentation searched other than minimum documentation to the extent that such documents are included in the fields searched

Electronic data base consulted during the international search (name of data base and, where practicable, search terms used)

CNTXT, ENTXTC, WPABSC, ENTXT: 变更, 变化, 变换, 波束, 调整, 改变, 更新, 工参, 工作参数, 函数, 目标, 权值, 权重, 确认, 小区, 簇, 子网, 修改, 修正, 寻优, 优化, 切片, 最优, subnet, cell, cluster, slice, modify, change, adjust, beam, operating parameter, target, weight, function, optimization

### C. DOCUMENTS CONSIDERED TO BE RELEVANT

| Category* | Citation of document, with indication, where appropriate, of the relevant passages | Relevant to claim No. |
| --- | --- | --- |
| X | CN 115278711 A (CHINA TELECOM CORP., LTD.) 01 November 2022 (2022-11-01) description, paragraphs [0089]-[0177], [0280], and [0281], and figures 1 and 2 | 1-11 |
| A | CN 113133022 A (CHINA MOBILE COMMUNICATIONS GROUP CHONGQING CO., LTD. et al.) 16 July 2021 (2021-07-16) entire document | 1-11 |
| A | CN 113271549 A (ZTE CORP.) 17 August 2021 (2021-08-17) entire document | 1-11 |
| A | US 2021058131 A1 (SAMSUNG ELECTRONICS CO., LTD.) 25 February 2021 (2021-02-25) entire document | 1-11 |
| A | WO 2022083275 A1 (INSPUR TIANYUAN COMMUNICATION INFORMATION SYSTEM CO., LTD.) 28 April 2022 (2022-04-28) entire document | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 October 2024** | **17 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/112695**

| Patent document cited in search report | | | Publication date (day/month/year) | Patent family member(s) | | | Publication date (day/month/year) |
|---|---|---|---|---|---|---|---|
| CN | 115278711 | A | 01 November 2022 | None | | | |
| CN | 113133022 | A | 16 July 2021 | None | | | |
| CN | 113271549 | A | 17 August 2021 | WO | 2021164633 | A1 | 26 August 2021 |
| | | | | EP | 4109936 | A1 | 28 December 2022 |
| | | | | US | 2023079472 | A1 | 16 March 2023 |
| US | 2021058131 | A1 | 25 February 2021 | EP | 3997805 | A1 | 18 May 2022 |
| | | | | WO | 2021034148 | A1 | 25 February 2021 |
| WO | 2022083275 | A1 | 28 April 2022 | CN | 112260731 | A | 22 January 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311110126X